# EUROPEAN PATENT SPECIFICATION

(11) **EP 2 986 656 B1**
(45) Date of publication and mention of the grant of the patent: **09.09.2020**
(21) Application number: 14725589.7
(22) Date of filing: 16.04.2014
(51) Int. Cl.: C08G 59/68, B32B 7/12, B32B 15/08, C08G 59/40, B32B 5/26, B32B 27/36, B32B 27/08, C09J 163/00, B32B 15/04, B32B 15/14, B32B 27/12, B32B 27/30, B32B 27/34

(54) **MULTIPLE ACCELERATOR SYSTEMS FOR EPOXY ADHESIVES**
MEHRERE BESCHLEUNIGERSYSTEME FÜR EPOXIDHAFTSTOFFE
SYSTÈMES À ACCÉLÉRATEURS MULTIPLES POUR DES ADHÉSIFS ÉPOXY

(30) Priority: 17.04.2013 US 201361812837 P
(43) Date of publication of application: 24.02.2016
(73) Proprietor: 3M Innovative Properties Company, St. Paul, MN 55133-3427 (US)
(72) Inventor: ANDERSON, Cyrus A., Saint Paul, MN 55133-3427 (US); CARUSO DAILEY, Mary M., Saint Paul, MN 55133-3427 (US); GEORGE, Clayton A., Saint Paul, MN 55133-3427 (US)
(74) Representative: Mathys & Squire
(86) International application number: PCT/US2014/034339
(87) International publication number: WO 2014/172444

(56) References cited:
- WO-A1-03/011971
- JP-A- H06 184 511
- DATABASE WPI Week 201402 Thomson Scientific, London, GB; AN 2013-K93241 XP002726623, & CN 102 993 915 A (SHANGHAI HAILONG PETROCHEMICAL INST) 27 March 2013 (2013-03-27)

## Description

### FIELD

The present disclosure relates one-part curable epoxy compositions having at least two latent accelerators. The present disclosure also relates adhesive compositions, cured adhesive compositions and articles made using one-part curable epoxy compositions.

### BACKGROUND

Fracture-toughened epoxy adhesives have excellent shear, peel, and impact resistance and are thus widely used for structural bonding in many industrial applications. Bonding with epoxy adhesives can enable end users to simplify the design and construction of goods by reducing the number of mechanical fasteners and/or welds used in assembly. Adhesive bonding can also improve corrosion resistance and reduce noise, vibration, and harshness (NVH) leading to improved quality and durability. Furthermore, adhesive bonding can enable use of mixed material constructions (e.g., bonding steel to aluminum or composites) which have improved performance. Such mixed material construction is not possible with conventional fastener technology (i.e., bonding prevents galvanic corrosion and overcomes incompatibility with welding).

Epoxy adhesives are generally supplied as two- or one-part formulations. Two-part formulations feature separate accelerator (or curative) and base (or resin) components which must be mixed for activation and cure. Although two-part formulations allow room-temperature cure and have a very long shelf-life (typically more than 1 year); careful mix metering of both components is necessary and can be problematic in large-scale automated processes. In contrast, one-part formulations do not require mixing prior to application because the curatives are dispersed in the resin during manufacture of the adhesive. Although one-part formulations do not require mixing, the shelf-life of such systems is significantly reduced relative to two-part formulations. Shelf-lives of greater than 6 months can be achieved by use of latent curatives that are thermally activated to effect cure. The cure temperature is often limited by the melting point of the curative, which typically exceeds 170 °C with conventional latent curatives.

The cure of one-part epoxy adhesives can be catalyzed by the use of various accelerators. Conventional accelerators include ureas and imidazoles, which are generally used individually as accelerators. However, these accelerators used alone may not provide the cure time, cure temperature and/or shelf life stability over broad ranges desirable for some applications.

Other advantages of the present disclosure will be apparent from the following description.

JP H06 184511 A discloses a composition of a one-component heat-curing epoxy-resin adhesive comprising a liquid epoxy resin, an dicyandiamide, an alkyl urea compound, an imidazole compound, and a hydrazide compound.

### SUMMARY

There exists a need for one-part curable epoxy compositions that can be cured in a specific and controlled time frame, at a particular temperature, and have a longer shelf life than conventional one-part epoxy curable compositions.

The presently disclosed one-part curable epoxy compositions provide reductions in cure temperature and cure time compared to conventional one-part curable epoxy compositions. Both of these features are desirable from the viewpoint of an end user as either one result in more efficient manufacture of goods. The presently disclosed one-part curable epoxy compositions having a combination of two or more accelerators allows for a longer shelf life of the resulting composition. This behavior is particularly useful in one-part curable epoxy formulations useful in various automotive applications. The epoxy compositions in the present disclosure provides a one-part curable epoxy composition comprising: a heat curable epoxy resin; and a latent curative system in an amount sufficient to cure the epoxy resin, comprising (i) at least one epoxy resin miscible first curative comprising a latent hardener, selected from dicyandiamide and its derivatives, and (ii) a combination of two substituted imidazoles, a combination of one substituted imidazole and two substituted ureas, and a combination of two substituted imidazoles and one substituted urea.

In some embodiments, the two or more latent accelerators are present in an amount of equal to or less than 1 wt% based on the total weight of the composition. In some embodiments, the heat curable epoxy resin is selected from at least one of diglycidyl ethers of bisphenol A, diglycidyl ethers of bisphenol F, and combinations of thereof. In some embodiments, the substituted ureas are selected from bis-substituted ureas. In some embodiments, the substituted imidazoles are selected from at least one of 1*-N* substituted-, 2-*C* substituted- imidazoles, metal imidazolate salts, and combinations thereof. In some embodiments, the heat curable epoxy resin is a diglycidyl ether of bisphenol A; the substituted ureas are bis-substituted ureas; and the substituted imidazoles are selected from at least one 1-*N* substituted-, and 2-*C* substituted- imidazoles.

In some embodiments, the one-part curable epoxy composition further comprises a third latent accelerator selected from at least one of substituted ureas, substituted imidazoles, and combinations thereof. In some embodiments, the one-part curable epoxy composition further comprises a latent hardener. In some embodiments, the latent hardener is dicyandiamide.

In another aspect, the present disclosure provides an adhesive composition comprising any of the presently disclosed one-part curable epoxy compositions. In some embodiments, the adhesive composition is curable at temperatures between 130°C and 200°C.

In another aspect, the present disclosure provides a composition comprising a cured adhesive composition according to the present disclosure. In some embodiments, the composition has a shear strength of at least 5 MPa. In some embodiments, the composition has a peel strength of at least 2.5 N/mm. In some embodiments, the composition has no more than 400% change in viscosity upon aging. In some embodiments, the composition has a shear strength of at least 20 MPa, a peel strength of at least 5 N/mm, and no more than 150% change in viscosity upon aging.

In yet another aspect, the present disclosure provides an article comprising two substrates; and a layer of an adhesive composition disposed between the two substrates, wherein the adhesive composition comprises a one-part curable epoxy composition comprising: (i). a heat curable epoxy resin; and (ii). a latent curative system in an amount sufficient to cure the epoxy resin, comprising (A) at least one epoxy resin miscible first curative comprising a latent hardener, selected from dicyandiamide and its derivatives, and (B) a combination of two substituted imidazoles, a combination of one substituted imidazole and two substituted ureas, and a combination of two substituted imidazoles and one substituted urea. In some embodiments, the first and second substrates are independently selected from metals, composites, plastics, and combinations thereof.

In some embodiments, the article has a shear strength of at least 5 MPa. In some embodiments, the article has a peel strength of at least 2.5 N/mm. In some embodiments, the article has no more than 400% change in viscosity upon aging. In some embodiments, the article has a shear strength of at least 20 MPa, a peel strength of at least 5 N/mm, and no more than 150% change in viscosity upon aging.

Various aspects and advantages of exemplary embodiments of the present disclosure have been summarized. The above Summary is not intended to describe each illustrated embodiment or every implementation of the present disclosure. Further features and advantages are disclosed in the embodiments that follow. The Drawings and the Detailed Description that follow more particularly exemplify certain preferred embodiments using the principles disclosed herein.

### BRIEF DESCRIPTION OF THE FIGURES

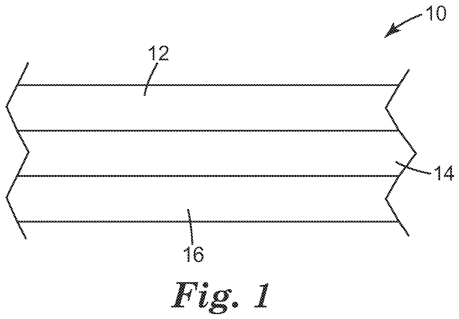

Fig. 1 is a cross section view of an article according to the present disclosure.

### DETAILED DESCRIPTION

Unless otherwise indicated, all numbers expressing quantities or ingredients, measurement of properties and so forth used in the Specification and embodiments are to be understood as being modified in all instances by the term "about." Accordingly, unless indicated to the contrary, the numerical parameters set forth in the foregoing specification and attached listing of embodiments can vary depending upon the desired properties sought to be obtained by those skilled in the art utilizing the teachings of the present disclosure. At the very least, and not as an attempt to limit the application of the doctrine of equivalents to the scope of the claimed embodiments, each numerical parameter should at least be construed in light of the number of reported significant digits and by applying ordinary rounding techniques.

For the following defined terms, these definitions shall be applied for the entire Specification, including the claims, unless a different definition is provided in the claims or elsewhere in the Specification based upon a specific reference to a modification of a term used in the following Glossary:

### Glossary

The words "a", "an", and "the" are used interchangeably with "at least one" to mean one or more of the elements being described.

The term "layer" refers to any material or combination of materials on or overlaying a substrate.

Words of orientation such as "atop," "on," "covering," "uppermost," "overlaying," "underlying" and the like for describing the location of various layers, refer to the relative position of a layer with respect to a horizontally-disposed, upwardly-facing substrate. It is not intended that the substrate, layers or articles encompassing the substrate and layers, should have any particular orientation in space during or after manufacture.

The term "separated by" to describe the position of a layer with respect to another layer and the substrate, or two other layers, means that the described layer is between, but not necessarily contiguous with, the other layer(s) and/or substrate.

The present disclosure includes one-part curable epoxy compositions having a heat curable epoxy resin and a latent curative system in an amount sufficient to cure the epoxy resin.

The epoxy resins or epoxides that are useful in the composition of the present disclosure may be any organic compound having at least one oxirane ring that is polymerizable by ring opening, i.e., an average epoxy functionality greater than one, and preferably at least two. The epoxides can be monomeric or polymeric, and aliphatic, cycloaliphatic, heterocyclic, aromatic, hydrogenated, or mixtures thereof. Preferred epoxides contain more than 1.5 epoxy group per molecule and preferably at least 2 epoxy groups per molecule. The useful materials typically have a weight average molecular weight of about 150 to about 10,000, and more typically of about 180 to about 1,000. The molecular weight of the epoxy resin is usually selected to provide the desired properties of the cured adhesive.

Suitable epoxy resins include linear polymeric epoxides having terminal epoxy groups (e.g., a diglycidyl ether of a polyoxyalkylene glycol), polymeric epoxides having skeletal epoxy groups (e.g., polybutadiene polyepoxy), and polymeric epoxides having pendant epoxy groups (e.g., a glycidyl methacrylate polymer or copolymer), and mixtures thereof. The epoxide-containing materials include compounds having the general formula: 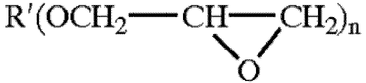 wherein: R' is alkyl, alkyl ether, or aryl, and n is an integer between 2 and 6.

These epoxy resins include aromatic glycidyl ethers, e.g., such as those prepared by reacting a polyhydric phenol with an excess of epichlorohydrin, cycloaliphatic glycidyl ethers, hydrogenated glycidyl ethers, and mixtures thereof. Such polyhydric phenols may include resorcinol, catechol, hydroquinone, and the polynuclear phenols such as p,p'-dihydroxydibenzyl, p,p'-dihydroxydiphenyl, p,p'-dihydroxyphenyl sulfone, p,p'-dihydroxybenzophenone, 2,2'-dihydroxy-1,1-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane. Also useful are polyhydric phenolic formaldehyde condensation products as well as polyglycidyl ethers that contain as reactive groups only epoxy groups or hydroxy groups.

Useful curable epoxy resins are also described in various publications including, for example, "Handbook of Epoxy Resins" by Lee and Nevill, McGraw-Hill Book Co., New York (1967), and Encyclopedia of Polymer Science and Technology, 6, p.322 (1986).

The choice of the epoxy resin used depends upon the end use for which it is intended. Epoxides with flexibilized backbones may be desired where a greater amount of ductility is needed in the bond line. Materials such as diglycidyl ethers of bisphenol A and diglycidyl ethers of bisphenol F can provide desirable structural adhesive properties that these materials attain upon curing, while hydrogenated versions of these epoxies may be useful for compatibility with substrates having oily surfaces.

Examples of commercially available epoxides useful in the present disclosure include diglycidyl ethers of bisphenol A (e.g, those available under the trade designations EPON 828, EPON 1001, EPON 1004, EPON 2004, EPON 1510, and EPON 1310 from Momentive Specialty Chemicals, Inc., and those under the trade designations D.E.R. 331, D.E.R. 332, D.E.R. 334, and D.E.N. 439 available from Dow Chemical Co.); diglycidyl ethers of bisphenol F (e.g., that are available under the trade designation ARALDITE GY 281 available from Huntsman Corporation); silicone resins containing diglycidyl epoxy functionality; flame retardant epoxy resins (e.g., that are available under the trade designation DER 560, a brominated bisphenol type epoxy resin available from Dow Chemical Co.); and 1,4-butanediol diglycidyl ethers.

Epoxy containing compounds having at least one glycidyl ether terminal portion, and preferably, a saturated or unsaturated cyclic backbone may optionally be added to the composition as reactive diluents. Reactive diluents may be added for various purposes such as to aid in processing, e.g., to control the viscosity in the composition as well as during curing, to flexibilize the cured composition, and to compatibilize materials in the composition. Examples of such diluents include: diglycidyl ether of cyclohexanedimethanol, diglycidyl ether of resorcinol, p-tert-butyl phenyl glycidyl ether, cresyl glycidyl ether, diglycidyl ether of neopentyl glycol, triglycidyl ether of trimethylolethane, triglycidyl ether of trimethylolpropane, triglycidyl p-amino phenol, N,N'-diglycidylaniline, N,N,N',N',-tetraglycidyl metaxylylene diamine, and vegetable oil polyglycidyl ether. Reactive diluents are commercially available under the trade designation HELOXY 107 and CARDURA N10 from Momentive Specialty Chemicals, Inc.

The composition preferably contains a toughening agent to aid in providing the desired overlap shear, peel resistance, and impact strength. Useful toughening agents are polymeric materials, which may react with the epoxy resin and may be cross-linked. Suitable toughening agents include polymeric compounds having both a rubbery phase and a thermoplastic phase or compounds which are capable of forming, with the epoxide group-containing material, both a rubbery phase and a thermoplastic phase on curing. Polymers useful as toughening agents are preferably selected to inhibit cracking of the cured epoxy composition.

Preferred polymeric toughening agents that have both a rubbery phase and a thermoplastic phase are acrylic core-shell polymers wherein the core is a acrylic copolymer having a glass transition temperature below about 0 °C. Such core polymers may include polybutyl acrylate, polyisooctyl acrylate, polybutadiene-polystyrene in a shell comprised of an acrylic polymer having a glass transition temperature above about 25 °C, such as polymethylmethacrylate. Commercially available core-shell polymers include those available as a dry powder under the trade designations ACRYLOID KM 323, ACRYLOID KM 330, and PARALOID BTA 731, from Dow Chemical Co., and KANE ACE B-564 from Kaneka Corporation. These core-shell polymers may also be available as a predispersed blend with a diglycidyl ether of bisphenol A at, for example, a ratio of 12 to 37 parts by weight of the core-shell polymer and are available under the trade designations KANE ACE MX 157, KANE ACE MX 257, KANE ACE MX 125.

A further preferred class of polymeric toughening agents which are capable of forming, with the epoxide group-containing material, both a rubbery phase and a thermoplastic phase on curing are carboxyl-terminated butadiene acrylonitrile compounds. Commercially available carboxyl-terminated butadiene acrylonitrile compounds include those available under the trade designations HYCAR 1300X8, HYCAR 1300X13, and HYCAR 1300X17 from Lubrizol Advanced Materials, Inc., Cleveland, Ohio.

Carboxyl-terminated butadiene acrylonitrile compounds may also be prereacted with a diglycidyl ether of bisphenol A at, for example, a ratio of 30 to 70 parts by weight of the carboxyl-terminated butadiene acrylonitrile compound to 70 to 30 parts by weight of the diglycidyl ether of bisphenol A to increase the pot-life of the composition and provide increased shear strength at high humidity. Compounds of this type are commercially available from Momentive Specialty Chemicals, Inc., under the EPON resin trade designation, such as, for example, EPON resin 58005, EPON resin 58006, EPON resin 58032, and EPON resin 58042.

Other preferred polymeric toughening agents are graft polymers, which have both a rubbery phase and a thermoplastic phase, such as those disclosed in US Patent 3,496,250. These graft polymers have a rubbery backbone having grafted thereto thermoplastic polymer segments. Examples of such graft polymers include, for example, methacrylatelbutadiene-sytrene, acrylate-methacrylate/butadiene-styrene and acrylonitrile/butadiene-styrene polymers. The rubbery backbone is preferably prepared so as to constitute from about 95 percent to about 40 percent by weight of the total graft polymer, so that the polymerized thermoplastic portion constitutes from about 5 percent to about 60 percent by weight of the graft polymer.

The toughening agents are preferably present in the composition in an amount of about 5 to about 40 weight percent, more preferably about 7.5 to about 30 weight percent, most preferably about 10 to about 25 weight percent based on the weight of the epoxide resin in the composition.

The adhesive composition can additionally contain a non-reactive plasticizer to modify rheological properties. Commercially available plasticizers include those available under the trade designation BENZOFLEX 131 available from Eastman Chemical and JAYFLEX DINA available from ExxonMobil Chemical.

The composition preferably contains a flow control agent or thickener, to provide the desired rheological characteristics to the composition. Suitable flow control agents include fumed silicas, such as treated fumed silica, available under the trade designation AB-O-SIL TS 720, and untreated fumed silica available under the trade designation CAB-O-SIL M5, from Cabot Corp.

The epoxy adhesive composition may also contain adhesion promoters to enhance the bond between the adhesive and the substrate. The specific type of adhesion promoter may vary depending upon the composition of the surface to which it will be adhered. Adhesion promoters that have been found to be particularly useful for surfaces coated with ionic type lubricants used to facilitate the drawing of metal stock during processing include, for example, dihydric phenolic compounds such as catechol and thiodiphenol.

The epoxy adhesive composition may also contain one or more conventional additives such as fillers, e.g., aluminum powder, carbon black, glass bubbles, talc, clay, calcium carbonate, barium sulfate, titanium dioxide, silicas, silicates, glass beads, and mica, fire retardants, antistatic materials, thermally and/or electrically conductive particles, and expanding agents including, for example, chemical blowing agents such as azodicarbonamide or expandable polymeric microspheres containing a hydrocarbon liquid, such as those sold under the trade designation EXPANCEL by Expancel Inc. (Duluth, Ga.). Particulate fillers can be in the form of flakes, rods, spheres, and the like. Additives are typically added in amounts to produce the desired effect in the resulting adhesive.

The epoxy composition of the present disclosure can be prepared by heating and mixing one or more epoxy resins at an elevated temperature typically between about 100 °C to about 180 °C to melt the resins. The resin is then cooled to about 90-150 °C and other epoxy resins, reactive diluents, and tougheners other than core-shell polymers are added under high shear mixing. If core-shell polymers are included in the composition, they are added as particles at this point and mixed, typically for several hours, until the particles are dispersed. Finally fillers and thickening agents are added and mixed to obtain a substantially homogeneous dispersion. The composition is then further cooled to between about 25-60 °C, before the curatives and optionally adhesion promoters are mixed into the epoxy composition. At this point, the epoxy composition is typically in a flowable state so that it can be poured into a suitable container for storage until it is used.

Latent curative systems suitable for use in compositions according to the present disclosure include latent hardeners and two or more latent accelerators. Latent hardeners useful in the present disclosure include those conventionally used for curing epoxy resin compositions and forming cross-linked polymer networks, including hydrazides such as aminodihydrazide, adipic dihydrazide, isopthalyl dihydrazide; guanidines such as tetramethyl guanidine; and, dicyandiamide.

The amount of latent hardener needed will vary from resin to resin and is generally to be provided in such an amount as to be effective in causing substantially complete curing within a desired length of time. A typical composition according to the present disclosure includes about 1-10%, by weight of latent hardener based on the total weight of the one-part curable epoxy composition. It will be understood that the final properties of the cured composition will be greatly influenced by the relative amounts of crosslinking and epoxy chain extension caused respectively by the latent hardener. In some embodiments, the latent curative system has at least one epoxy resin miscible first curative comprising a latent hardener, selected from dicyandiamide and its derivatives.

In some embodiments, the latent curative system has two or more latent accelerators selected from a combination of two substituted imidazoles, a combination of one substituted imidazole and two substituted ureas, and a combination of two substituted imidazoles and one substituted urea. In some embodiments, the components of the resin miscible first curative can be pre-blended and then added to the heat curable epoxy resin. In some embodiments, the components of the resin miscible first curative can be separately added to the heat curable epoxy resin

In some embodiments, the ureas are selected from bis-substituted ureas. In some embodiments, the imidazoles are selected from 1-*N* substituted-, 2-*C* substituted- imidazoles, and metal imidazolate salts as described in US Patent 4,948,449, having a melting point greater than 200 °C . Suitable curatives are commercially available under the trade designations CUREZOL 2PHZ-S, CUREZOL 2MZ-AZINE, and CUREZOL 2MA-OK from Air Products and Chemicals; under the trade designation ARADUR 3123 from Huntsman Advanced Materials; and under the trade designation OMICURE U-35 and OMICURE U-52 from CVC Thermoset Specialties.

In some embodiments, the two or more latent accelerators are present in an amount of equal to or less than 1 wt% based on the total weight of the heat curable one-part epoxy composition. In some embodiments there are more than two latent accelerators. For example, there are three or more latent accelerators in the presently disclosed epoxy compositions. The third or more latent accelerators can be selected from at least one of substituted ureas, substituted imidazoles, and combinations thereof.

The presently disclosed epoxy compositions can be used to prepare adhesive compositions. In some embodiments, the adhesive compositions are curable at temperatures between 130°C and 200°C.

The present disclosure provides for cured adhesive compositions having various performance results depending on the application for which they are used. In some embodiments, the cured adhesive compositions have a shear strength of at least 5 MPa. In some embodiments, the cured adhesive compositions have a shear strength of at least 10 MPa. In some embodiments, the cured adhesive compositions have a shear strength of at least 20 MPa. In some embodiments, the cured adhesive compositions have a peel strength of at least 2.5 N/mm. In some embodiments, the cured adhesive compositions have a peel strength of at least 5 N/mm. In some embodiments, the cured adhesive compositions have aging of no more than 400% change in viscosity. In some embodiments, the cured adhesive compositions have aging of no more than 150% change in viscosity.

The presently disclosed epoxy compositions, adhesive compositions and cured adhesive compositions can be used to create various articles. Referring now to Fig. 1, such articles 10 generally include at least two substrates 12, 16 having a layer 14 of an adhesive composition disposed therebetween. The layer 14 of an adhesive composition can be selected from any of the presently disclosed adhesive compositions. In some embodiments, the adhesive composition useful in the presently disclosed articles is a one-part curable epoxy composition having a heat curable epoxy resin and a latent curative system in an amount sufficient to cure the epoxy resin the heat curable epoxy resin. In some embodiments the heat curable epoxy resin is selected from at least one of diglycidyl ethers of bisphenol A, diglycidyl ethers of bisphenol F, and combinations of thereof. In some embodiments the substituted ureas are selected from bis-substituted ureas. In some embodiments, the substituted imidazoles are selected from at least one 1-*N* substituted-, 2-*C* substituted- imidazoles, metal imidazolate salts, and combinations thereof.

In some embodiments, the adhesive composition useful in the presently disclosed articles includes diglycidyl ether of bisphenol A as the heat curable epoxy resin; bis-substituted ureas as the substituted ureas; and at least one of 1-*N* substituted-, and 2-*C* substituted- imidazoles as the substituted imidazoles. In some embodiments, the adhesive composition also includes a third latent accelerator selected from at least one of substituted ureas, substituted imidazoles, and combinations thereof. In some embodiments, the adhesive composition also includes a latent hardener. In some embodiments, the latent hardener is dicyandiamide.

In some embodiments, the presently disclosed article has a shear strength of at least 5 MPa when tested according to the test method described in the section entitled "Shear Strength" below. In some embodiments, the article has a peel strength of at least 2.5 N/mm when tested according to the test method described in the section entitled "Peel Resistance" below. In some embodiments, the article has an aging of no more than 400% change in viscosity when tested according to the test method described as "Adhesive Aging" below. In some embodiments, the article has a shear strength of at least 20 MPa when tested according to the test method described in the section entitled "Shear Strength" below; a peel strength of at least 5 N/mm when tested according to the test method described in the section entitled "Peel Resistance" below; and an aging of no more than 150% change in viscosity when tested according to the test method described as "Adhesive Aging" below.

Substrates useful in the present disclosure can be selected from various materials depending on the application. Materials useful for substrates in the present disclosure include but are not limited to metal, composites, plastics, and the like. Metals useful as substrates in the present disclosure include but are not limited to aluminum and steel, such as high strength steel, stainless steel, galvanized steel, surface treated metals. Surface treatments include but are not limited to paints, oil draw lubricants or stamping lubes, electrocoats, powder coats, primers, chemical and physical surface treatments, and the like. Composites useful as substrates in the present disclosure include but are not limited to glass reinforced composites, carbon reinforced composites. Plastics useful as substrates in the present disclosure include but are not limited to nylon, polycarbonate, polyester, acrylic, acrylonitrile butadiene styrene, and the like.

Exemplary embodiments of the present disclosure have been described above and are further illustrated below by way of the following Examples, which are not to be construed in any way as imposing limitations upon the scope of the present disclosure. On the contrary, it is to be clearly understood that resort may be had to various other embodiments, modifications, and equivalents thereof which, after reading the description herein, may suggest themselves to those skilled in the art without departing from the scope of the appended claims.

### EXAMPLES

The following examples are intended to illustrate exemplary embodiments within the scope of this disclosure. Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.
All amounts recited are in parts by weight unless otherwise specified.

### Materials

| Designation | Description |
|---|---|
| EPON 828 | epoxy resin comprised of diglycidyether of bisphenol A obtained from Momentive Specialty Chemicals, Inc., Columbus, OH |
| KANE ACE B-564 | core-shell rubber comprised of a copolymer of methyl methacrylate, butadiene, and styrene obtained from Kaneka Corporation, Osaka, Japan |
| CARDURA N10 | diluent comprised of the glycidyl ester of versatic acid obtained from Momentive Specialty Chemicals, Inc., Columbus, OH |
| NYAD G | filler comprised of calcium inosilicate obtained from NYCO Minerals Inc., Willsboro, NY |
| CAB-O-SIL TS-720 | thickening agent comprised of surface-treated fumed silica obtained from Cabot Corporation, Boston, MA |
| GL0191B4/180-250 | glass beads obtained from Mo-Sci Corporation, Rolla, MO, and were used to control the bond-line thickness of test specimens |
| AMICURE CG-1200G | curative comprised of micronized dicyandiamide and silica obtained from Air Products and Chemicals, Inc., Allentown, PA |
| Urea | obtained from J. T. Baker Chemical Company, Phillipsburg, NJ. |
| IMICURE AMI-2 | substituted imidazole accelerator comprised of 2-methyl imidazole obtained from Air Products and Chemicals, Inc., Allentown, PA |
| OMICURE U52 | substituted urea accelerator comprised of 4,4' methylene bis(phenyl dimethyl urea) obtained from CVC Thermoset Specialties, Moorestown, NJ |
| OMICURE U35 | substituted urea accelerator comprised of a proprietary cycloaliphatic bisurea obtained from CVC Thermoset Specialties, Moorestown, NJ |
| ARADUR 3123 | substituted imidazole accelerator obtained from Huntsman Advanced Materials GmbH, Basel, Switzerland |
| Copper(II) imidazolate (CuIm₂) | metal imidazolate salt accelerator made according to methods described in US Patent 6,506,494 |
| CUREZOL 2-MAOK | substituted imidazole accelerator comprised of diamino-6[2'-methylimidazolyl-(1)]ethyl-s-triazine, 2,4-, isocyanurate obtained from Air Products and Chemicals, Inc., Allentown, PA |
| CUREZOL 2-PHZ 7/10 | substituted imidazole accelerator comprised of 2-phenyl-4,5-dihydroxymethylimidazole obtained from Air Products and Chemicals, Inc., Allentown, PA |

### Test Methods

### Peel Resistance

The peel resistance of each adhesive formulation was measured by bonding 25 mm x 150 mm x 0.8 mm steel coupons into T-Peel specimens as described in ASTM D1876-08. The steel coupons used for measuring peel resistance were hot-dipped galvanized steel (HDG G70U70) and were obtained from ACT Test Panels LLC. The steel coupons were prepared by wiping them with acetone and allowing them to air-dry for five minutes. A bead of adhesive was applied, two substrates were mated together and were then clamped in place using disposable binder clips. Upon curing (see below), the clips were removed and excess adhesive was scraped from each sample using a razor. T-Peel specimens were clamped into the jaws of a tensile tester (Instron, model 5581 equipped with a 10,000 lb load cell) and then pulled apart to bond failure at a crosshead speed of 50 mm per minute. Results are reported in Newtons per millimeter width (N/mm).

### Shear Strength

Overlap shear strength of each adhesive formulation was measured by bonding 25 mm x 100 mm x 1.6 mm steel coupons into test specimens as described in SAE J1523. The steel coupons used for measuring shear strength were cold-rolled steel (Q-Panel, RS-14) and were obtained from Q-Lab Corp. The steel coupons were prepared by wiping them with acetone and allowing them to air-dry for five minutes. A bead of adhesive was applied, two substrates were mated together and were then clamped in place using disposable binder clips. Upon curing (see below), the clips were removed. Overlap shear specimens were clamped into the jaws of a tensile tester (Instron, model 5581 equipped with a 10,000 lb load cell) and pulled apart to bond failure at a crosshead speed of 12.5 mm per minute. Results are reported in mega pascals (MPa).

### Adhesive Cure

The uncured bonded substrates were placed in a model LFD-1-42-3 forced air oven (Despatch) set to the cure temperature. The bonded substrates were kept in the oven for a total of 40 minutes and were then removed and allowed to cool to ambient temperature.

### Differential Scanning Calorimetry

Differential scanning calorimetry (DSC) was performed using a Q2000 DSC from TA Instruments Inc. A typical DSC experiment involved sealing a 6-20 mg sample of the epoxy formulation in an aluminum, T-zero sample pan and heating the sample at a rate of 5 °C per minute from 25 °C to 250 °C. A plot of heat flow versus temperature was used for the analysis. The onset temperature (°C) of the main exotherm is a measure of the minimum temperature at which thermal cure begins. The glass transition temperature (T_{g}) was measured by a modulated thermal scan of the cured epoxy formulation from 25 °C to 300 °C at 1 °C per minute modulated intervals. The reported T_{g} represents the midpoint value of the transition.

### Rheological Measurements

Rheological analysis was performed using an MCR 302 rheometer from Anton Paar GmbH. Measurements were performed using 25 mm stainless steel plates and a fixed gap of 1 mm. Adhesive was loaded onto the plates, the gap was set, excess material was removed. A 60 second pre-shear at 0.5 s⁻¹ was applied prior to measurement at 3 s⁻¹ over a 60 second interval. The viscosity is reported as the average viscosity over this interval.

### Adhesive Aging

A portion of each adhesive was placed in a plastic container and then placed in a resealable plastic bag. The adhesive was stored at 38 °C for 7 days and upon settling, the initial viscosity of each formulation was determined as described above. The adhesive was then stored at 38 °C for an additional 18 days and analyzed to determine the change in viscosity upon aging. The percent change in viscosity of the aged versus the initial material is reported and used to assess shelf-stability of each formulation.

### General Procedure for Epoxy Formulation

The epoxy Formulation A listed in TABLE 1 below was prepared by mixing the epoxy, diluent, and core-shell rubber in a one-gallon metal container using a lab mixer (Netzsch Premier Mill, model 2005 equipped with a high-viscosity mixing blade) for 15 minutes. The container was placed in an oven set at 100-130 °C and was heated for approximately 2 hours. The container was removed from the oven and the mixture was stirred using the lab mixer until a uniform dispersion was obtained. The filler, thickening agent, and glass beads were then added and the mixture was stirred until a uniform dispersion was obtained. Pbw indicates parts by weight.

**TABLE 1**

| Epoxy Formulation (pbw) | A |
|---|---|
| EPON™ 828 | 56.4 |
| KANE ACE B-564 | 10 |
| CARDURA N10 | 8 |
| NYAD G | 20 |
| CAB-O-SIL TS-720 | 2 |
| Glass Beads | 0.1 |

### Examples 1-3 & Comparative Examples C1-C5

Examples 1-3, which are not according to the invention, were prepared by mixing Epoxy Formulation A described above and varying amounts of curatives and accelerators as shown in TABLE 2. The samples were analyzed by DSC and tested for peel resistance and shear strength upon curing at three different temperatures (e.g., 130 °C, 150 °C, and 190 °C). The change in viscosity upon storage at 38 °C was measured and used to assess the shelf stability of Examples 1-3. Comparative examples C1-C3 model the curative system reported in US 4670533. Comparative example C4 serves as a demonstration of the curative system reported in US 4670533 at the levels investigated herein. Examples 1-3 demonstrate the use of combined accelerators and are illustrative of this invention. Comparative example C5 is a control formulation without any accelerator. Examples 1-3 give superior overlap shear strengths under all cure conditions. Although Examples 1 through 3 give comparable peel resistance to the comparative examples when cured at 190 °C, these examples give superior performance versus the comparative examples when cured at 130 °C and 150 °C. Furthermore, Examples 1-3 give superior aging properties, as indicated by the smaller % change in viscosity upon aging relative to comparative examples C1-C4.

**TABLE 2**

| | Example | | | | | | | |
|---|---|---|---|---|---|---|---|---|
| | C1 | C2 | C3 | C4 | 1 | 2 | 3 | C5 |
| **Epoxy Formulation (pbw)** | | | | | | | | |
| Epoxy A | 96 | 96 | 96 | 94 | 94 | 94 | 94 | 94 |
| AMICURE CG-1200G | 1.7 | 1.7 | 1.7 | 6 | 6 | 6 | 6 | 6 |
| Urea | 1.7 | 1.7 | 1.7 | 0.25 | | | | |
| IMICURE AMI-2 | 0.4 | | | 0.25 | | | | |
| OMICURE U52 | | | | | 0.25 | 0.25 | | |
| OMICURE U35 | | | | | | | 0.25 | |
| ARADUR 3123 | | 0.4 | | | | | | |
| CuIm₂ | | | | | | | 0.25 | |
| CUREZOL 2-MAOK | | | | | 0.25 | | | |
| CUREZOL 2-PHZ 7/10 | | | | | | 0.25 | | |

| **DSC** | | | | | | | | |
|---|---|---|---|---|---|---|---|---|
| onset T(°C) | 116 | 126 | 160 | 150 | 136 | 153 | 151 | 191 |

| **Peel Resistance (N/mm)** | | | | | | | | |
|---|---|---|---|---|---|---|---|---|
| 130°C cure | 3.0 | 3.0 | 0 | 0 | 6.7 | 7.7 | 7.7 | 0 |
| 150°C cure | 4.6 | 5.6 | 0 | 4.7 | 7.4 | 9.5 | 7.4 | 0 |
| 190°C cure | 6.1 | 6.1 | 5.3 | 8.1 | 6.1 | 6.8 | 7.2 | 4.6 |

| **Shear Strength (MPa)** | | | | | | | | |
|---|---|---|---|---|---|---|---|---|
| 130°C cure | 2 | 0 | 0 | 0 | 26 | 26 | 32 | 0 |
| 150°C cure | 3 | 6 | 0 | 9 | 35 | 36 | 37 | 0 |
| 190°C cure | 17 | 18 | 12 | 32 | 35 | 34 | 33 | 32 |

| **Aging** | | | | | | | | |
|---|---|---|---|---|---|---|---|---|
| Viscosity change (%) | 378 | 531 | 77 | 711 | 11 | 17 | 27 | 0 |

### Examples 4-6 & Comparative Examples C6-C13

Examples 4-6 were prepared by mixing Epoxy Formulation A described above and varying amounts of curatives and accelerators as shown in TABLE 3 below. The combined use of two substituted imidazole accelerators gives a balance of improved mechanical performance at low-temperature cure and improved shelf-stability. Comparative examples C6-C13 serve as controls featuring one accelerator at either the same total accelerator concentration or the same individual accelerator concentration as in Examples 4-6. The shear strength of example 4 exceeds that of comparative examples C6-C9 when cured at 130 °C and 150 °C. The peel resistance of example 4 also exceeds that of comparative examples C6-C9 when cured at 130 °C. Although C6 gives acceptable performance when cured at each temperature, this material forms a gel upon aging. Although C8 gives acceptable shear strength when cured at 130 °C and gives excellent shelf-stability, this material does not provide acceptable peel resistance when cured at 130 °C. Example 5 gives modest peel resistance when cured at 130 °C, as compared to Example 4 and comparative example C6, however, example 5 gives improved peel resistance when cured at 150 °C and 190 °C. Example 5 also gives improved shelf-stability versus Example 4 and comparative example C6. Example 5 gives superior performance when cured at 130 °C versus comparative example C10. Example 6 has similar shear strength and shelf-stability as comparative examples C12 and C13, but gives substantially better peel resistance versus comparative examples C12 and C13. The combined use of imidazole accelerators provides a desirable balance of good mechanical properties at low-temperature cure and acceptable shelf-stability.

**TABLE 3**

| | Example | | | | | | | | | | |
|---|---|---|---|---|---|---|---|---|---|---|---|
| | 4 | C6 | C7 | C8 | C9 | 5 | C10 | C11 | 6 | C12 | C13 |
| **Epoxy Formulation (pbw)** | | | | | | | | | | | |
| Epoxy A | 94 | 94 | 94 | 94 | 94 | 94 | 94 | 94 | 94 | 94 | 94 |
| AMICURE CG-1200G | 6 | 6 | 6 | 6 | 6 | 6 | 6 | 6 | 6 | 6 | 6 |
| ARADUR 3123 | 0.25 | 0.5 | 0.25 | | | 0.25 | | | | | |
| CUREZOL 2-PHZ 7/10 | 0.25 | | | 0.5 | 0.25 | | | | | | |
| CUREZOL 2-MAOK | | | | | | 0.25 | 0.5 | 0.25 | 0.25 | | |
| CuIm₂ | | | | | | | | | 0.25 | 0.5 | 0.25 |

| **DSC** | | | | | | | | | | | |
|---|---|---|---|---|---|---|---|---|---|---|---|
| onset T (°C) | 145 | 126 | 127 | 155 | 154 | 130 | 134 | 137 | 135 | 142 | 141 |

| **Peel Resistance (N/mm)** | | | | | | | | | | | |
|---|---|---|---|---|---|---|---|---|---|---|---|
| 130 °C cure | 7.4 | 6.3 | 0 | 0 | 0 | 2.8 | 0 | 0 | 8.4 | 7.5 | 6.7 |
| 150 °C cure | 5.3 | 9.3 | | 8.1 | | 10.0 | 9.3 | | 9.6 | 6.7 | |
| 190 °C cure | 5.3 | 6.5 | | 5.3 | | 8.4 | 6.5 | | 7.4 | 4.9 | |

| **Shear Strength (MPa)** | | | | | | | | | | | |
|---|---|---|---|---|---|---|---|---|---|---|---|
| 130 °C cure | 26 | 24 | 1 | 22 | 0 | 5 | 0 | 0 | 28 | 27 | 26 |
| 150 °C cure | 37 | 35 | | 35 | | 36 | 35 | | 33 | 33 | |
| 190 °C cure | 34 | 37 | | 35 | | 34 | 32 | | 32 | 33 | |

| **Aging** | | | | | | | | | | | |
|---|---|---|---|---|---|---|---|---|---|---|---|
| Viscosity change (%) | 400 | gel | 0 | 5 | -14 | 113 | -1 | -10 | 36 | 31 | 18 |

### Examples 1-3 & Comparative Examples C8-C17

Examples 1-3 were prepared by mixing Epoxy Formulation A described above and varying amounts of curatives and accelerators as shown in TABLE 4 below. The combined use of one substituted imidazole and one substituted urea accelerator gives a balance of improved mechanical performance at low-temperature cure. Example 3 gives superior shear strength and peel resistance versus comparative examples C14 and C15, which contain only one substituted urea accelerator. Although comparative examples C12 and C13, containing only one substituted imidazole, give generally comparable performance to Example 3, Example 3 gives improved peel resistance when cured at 150 and 190 °C, and improved shear strength when cured at 130 °C. Example 1 gives improved peel resistance versus comparative examples C16 when cured at 150 °C and 190 °C. Example 1 also gives improved shear strength and peel resistance than comparative examples C10 and C11 when cured at 130 °C. Comparative examples C16 and C17 contain a substituted urea and C10 and C11 contain a substituted imidazole. Example 2 gives improved peel resistance versus comparative examples C8 and C9 when cured at each temperature and gives improved shear strength when cured at 130 °C. Example 2 also gives improved peel resistance versus comparative example C16 when cured at 150 °C and 190 °C.

**TABLE 4**

| | Example | | | | | | | | | | | | |
|---|---|---|---|---|---|---|---|---|---|---|---|---|---|
| | 3 | C14 | C15 | C12 | C13 | 1 | C16 | C17 | C10 | C11 | 2 | C8 | C9 |
| **Epoxy Formulation (pbw)** | | | | | | | | | | | | | |
| Epoxy A | 94 | 94 | 94 | 94 | 94 | 94 | 94 | 94 | 94 | 94 | 94 | 94 | 94 |
| AMICURE CG-1200G | 6 | 6 | 6 | 6 | 6 | 6 | 6 | 6 | 6 | 6 | 6 | 6 | 6 |

| *Substituted urea accelerators* | | | | | | | | | | | | | |
|---|---|---|---|---|---|---|---|---|---|---|---|---|---|
| OMICURE U35 | 0.25 | 0.5 | 0.25 | | | | | | | | | | |
| OMICURE U52 | | | | | | 0.25 | 0.5 | 0.25 | | | 0.25 | | |

| *Substituted imidazole accelerators* | | | | | | | | | | | | | |
|---|---|---|---|---|---|---|---|---|---|---|---|---|---|
| CuIm₂ | 0.25 | | | 0.5 | 0.25 | | | | | | | | |
| CUREZOL 2- | | | | | | 0.25 | | | 0.5 | 0.25 | | | |
| MAOK | | | | | | | | | | | | | |
| CUREZOL 2-PHZ | | | | | | | | | | | 0.25 | 0.5 | 0.25 |
| 7/10 | | | | | | | | | | | | | |

| **DSC** | | | | | | | | | | | | | |
|---|---|---|---|---|---|---|---|---|---|---|---|---|---|
| onset T (°C) | 151 | 146 | 147 | 142 | 141 | 136 | 136 | 137 | 134 | 137 | 153 | 155 | 154 |

| **Peel Resistance (N/mm)** | | | | | | | | | | | | | |
|---|---|---|---|---|---|---|---|---|---|---|---|---|---|
| 130 °C cure | 7.7 | 0 | 0 | 7.5 | 6.7 | 6.7 | 7.2 | 0 | 0 | 0 | 7.7 | 0 | 0 |
| 150 °C cure | 7.4 | 6.1 | | 6.7 | | 7.4 | 5.8 | | 9.3 | | 9.5 | 8.1 | |
| 190 °C cure | 7.2 | 4.6 | | 4.9 | | 6.1 | 5.1 | | 6.5 | | 6.8 | 5.3 | |

| **Shear Strength (MPa)** | | | | | | | | | | | | | |
|---|---|---|---|---|---|---|---|---|---|---|---|---|---|
| 130 °C cure | 32 | 8 | 0 | 27 | 26 | 26 | 31 | 1 | 0 | 0 | 26 | 22 | 0 |
| 150 °C cure | 37 | 33 | | 33 | | 35 | 34 | | 35 | | 36 | 35 | |
| 190 °C cure | 33 | 29 | | 33 | | 35 | 35 | | 32 | | 34 | 35 | |

| **Aging** | | | | | | | | | | | | | |
|---|---|---|---|---|---|---|---|---|---|---|---|---|---|
| Viscosity change (%) | 27 | -5 | 0 | 31 | 18 | 11 | 11 | -28 | -1 | -10 | 17 | 5 | -14 |

### Example 7

Example 7 was prepared by mixing Epoxy Formulation A described above and the curatives and accelerators as shown in TABLE 5. The combined use of one substituted imidazole and two substituted urea accelerators gives a balance of improved mechanical performance at low-temperature cure. Comparative examples C6-C7 and C14-C17 serve as controls featuring each accelerator at either the same total accelerator concentration or half the total accelerator concentration as in Example 7. Example 7 gives improved peel resistance when cured at 150 °C and 190 °C versus comparative example C14 and gives improved shear strength when cured at each temperature. Example 7 gives improved peel resistance and shear strength when cured at 150 °C versus comparative example C16. Comparative example C6 forms a gel upon aging and has significantly poorer shelf-stability than Example 7 and has poorer peel and shear performance when cured at 130 °C. Comparative examples C15, C17, and C7 do not develop acceptable shear strength or peel resistance when cured at 130 °C.

**TABLE 5**

| | Example | | | | | | |
|---|---|---|---|---|---|---|---|
| | 7 | C14 | C15 | C16 | C17 | C6 | C7 |
| **Epoxy Formulation (pbw)** | | | | | | | |
| Epoxy A | 94 | 94 | 94 | 94 | 94 | 94 | 94 |
| AMICURE CG- | | | | | | | |
| 1200G | 6 | 6 | 6 | 6 | 6 | 6 | 6 |
| OMICURE U35 | 0.17 | 0.5 | 0.25 | | | | |
| OMICURE U52 | 0.17 | | | 0.5 | 0.25 | | |
| ARADUR 3123 | 0.17 | | | | | 0.5 | 0.25 |

| **DSC** | | | | | | | |
|---|---|---|---|---|---|---|---|
| onset T (°C) | 131 | 146 | 147 | 136 | 137 | 126 | 127 |

| **Peel Resistance (N/mm)** | | | | | | | |
|---|---|---|---|---|---|---|---|
| 130 °C cure | 6.5 | 0 | 0 | 7.2 | 0 | 6.3 | 0 |
| 150 °C cure | 8.1 | 6.1 | | 5.8 | | 9.3 | |
| 190 °C cure | 5.1 | 4.6 | | 5.1 | | 6.5 | |

| **Shear Strength (MPa)** | | | | | | | |
|---|---|---|---|---|---|---|---|
| 130 °C cure | 26 | 8 | 0 | 31 | 1 | 24 | 1 |
| 150 °C cure | 36 | 33 | | 34 | | 35 | |
| 190 °C cure | 34 | 29 | | 35 | | 37 | |

| **Aging** | | | | | | | |
|---|---|---|---|---|---|---|---|
| Viscosity change (%) | 91 | -5 | 0 | 11 | -28 | gel | 0 |

### Example 8

Example 8 was prepared by mixing Epoxy Formulation A described above and the curatives and accelerators as shown in TABLE 6. The combined use of two substituted imidazoles and one substituted urea accelerator gives a balance of improved mechanical performance at low-temperature cure. Comparative examples C8-C11 and C16-C17 serve as controls featuring each accelerator at either the same total accelerator concentration or half the total accelerator concentration as in Example 8. Example 8 gives improved peel resistance when cured at 150 °C and 190 °C versus comparative example C16 and also gives improved shelf-stability than comparative examples C16, C8, and C10 which contain each individual accelerator at the same total concentration. Example 8 gives improved peel resistance and shear strength when cured at 130 °C versus comparative examples C8, C9, C10, and C11. Example 8 also gives improved peel resistance when cured at 150 °C and 190 °C versus comparative examples C8 and C9. Comparative examples C17, C9, and C11 do not develop acceptable shear strength or peel resistance when cured at 130 °C.

**TABLE 6**

| | Example | | | | | | |
|---|---|---|---|---|---|---|---|
| | 8 | C16 | C17 | C8 | C9 | C10 | C11 |
| **Epoxy Formulation (pbw)** | | | | | | | |
| Epoxy A | 94 | 94 | 94 | 94 | 94 | 94 | 94 |
| AMICURE CG-1200G | 6 | 6 | 6 | 6 | 6 | 6 | 6 |
| OMICURE U52 | 0.17 | 0.5 | 0.25 | | | | |
| CUREZOL 2-PHZ 7/10 | 0.17 | | | 0.5 | 0.25 | | |
| CUREZOL 2-MAOK | 0.17 | | | | | 0.5 | 0.25 |

| **DSC** | | | | | | | |
|---|---|---|---|---|---|---|---|
| onset T (°C) | 136 | 136 | 137 | 155 | 154 | 134 | 137 |

| **Peel Resistance (N/mm)** | | | | | | | |
|---|---|---|---|---|---|---|---|
| 130 °C cure | 6.0 | 7.2 | 0 | 0 | 0 | 1.8 | 0 |
| 150 °C cure | 9.8 | 5.8 | | 8.1 | | 9.3 | |
| 190 °C cure | 6.8 | 5.1 | | 5.3 | | 6.5 | |

| **Shear Strength (MPa)** | | | | | | | |
|---|---|---|---|---|---|---|---|
| 130 °C cure | 24 | 31 | 1 | 22 | 0 | 0 | 0 |
| 150 °C cure | 35 | 34 | | 35 | | 35 | |
| 190 °C cure | 34 | 35 | | 35 | | 32 | |

| **Aging** | | | | | | | |
|---|---|---|---|---|---|---|---|
| Viscosity change (%) | -10 | 11 | -28 | 5 | -14 | -1 | -10 |

### Example 9

Example 9 was prepared by mixing Epoxy Formulation A described above and the curatives and accelerators as shown in TABLE 7. The combined use of two substituted imidazoles and one substituted urea accelerator gives a balance of improved mechanical performance at low-temperature cure. Comparative examples C6-C9 and C16-C17 serve as controls featuring each accelerator at either the same total accelerator concentration or half the total accelerator concentration as in Example 9. Example 9 gives improved shear strength when cured at 150 °C and improved peel resistance when cured at 150 °C and 190 °C versus comparative example C16. Example 9 gives improved peel resistance when cured at 130 °C and 190 °C, improved shear strength when cured at 130 °C and 150 °C, and improved shelf-stability versus comparative example C6. Example 9 also gives improved performance when cured at 130 °C versus comparative examples C17, C7, C8, and C9.

**TABLE 7**

| | Example | | | | | | |
|---|---|---|---|---|---|---|---|
| | 9 | C16 | C17 | C6 | C7 | C8 | C9 |
| **Epoxy Formulation (pbw)** | | | | | | | |
| Epoxy A | 94 | 94 | 94 | 94 | 94 | 94 | 94 |
| AMICURE CG-1200G | 6 | 6 | 6 | 6 | 6 | 6 | 6 |
| OMICURE U52 | 0.17 | 0.5 | 0.25 | | | | |
| ARADUR 3123 | 0.17 | | | 0.5 | 0.25 | | |
| CUREZOL 2-PHZ 7/10 | 0.17 | | | | | 0.5 | 0.25 |

| **DSC** | | | | | | | |
|---|---|---|---|---|---|---|---|
| onset T (°C) | 146 | 136 | 137 | 126 | 127 | 155 | 154 |

| **Peel Resistance (N/mm)** | | | | | | | |
|---|---|---|---|---|---|---|---|
| 130 °C cure | 7.2 | 7.2 | 0 | 6.3 | 0 | 0 | 0 |
| 150 °C cure | 8.1 | 5.8 | | 9.3 | | 8.1 | |
| 190 °C cure | 8.2 | 5.1 | | 6.5 | | 5.3 | |

| **Shear Strength (MPa)** | | | | | | | |
|---|---|---|---|---|---|---|---|
| 130 °C cure | 29 | 31 | 1 | 24 | 1 | 22 | 0 |
| 150 °C cure | 41 | 34 | | 35 | | 35 | |
| 190 °C cure | 35 | 35 | | 37 | | 35 | |

| **Aging** | | | | | | | |
|---|---|---|---|---|---|---|---|
| Viscosity change (%) | 138 | 11 | -28 | gel | 0 | 5 | -14 |

While the specification has described in detail certain exemplary embodiments, it will be appreciated that those skilled in the art, upon attaining an understanding of the foregoing, may readily conceive of alterations to, variations of, and equivalents to these embodiments. Accordingly, it should be understood that is the claims are not to be unduly limited to the illustrative embodiments set forth hereinabove. Various exemplary embodiments have been described. These and other embodiments are within the scope of the claims.

## Claims

1. A one-part curable epoxy composition comprising:
a. a heat curable epoxy resin; and
b. a latent curative system in an amount sufficient to cure the epoxy resin, comprising
(i) at least one epoxy resin miscible first curative comprising a latent hardener, selected from dicyandiamide and its derivatives, and
(ii) two or more latent accelerators selected from a combination of two substituted imidazoles, a combination of one substituted imidazole and two substituted ureas, and a combination of two substituted imidazoles and one substituted urea.

2. The composition of claim 1 wherein the two or more latent accelerators are present in amount of equal to or less than 1 wt% based on the total weight of the composition.

3. The composition of any of the preceding claims wherein the heat curable epoxy resin is selected from at least one of diglycidyl ethers of bisphenol A, diglycidyl ethers of bisphenol F, and combinations thereof.

4. The composition of any of the preceding claims wherein the substituted ureas are selected from bis-substituted ureas.

5. The composition of any of the preceding claims wherein the substituted imidazoles are selected from at least one of 1-*N* substituted-, 2-*C* substituted- imidazoles, metal imidazolate salts, and combinations thereof.

6. The composition of any of the preceding claims wherein the heat curable epoxy resin is a diglycidyl ether of bisphenol A; the substituted ureas are bis-substituted ureas; and the substituted imidazoles are selected from at least one 1-*N* substituted-, and 2-*C* substituted- imidazoles.

7. The composition of any of the preceding claims, wherein, when the latent accelerators are a combination of two substituted imidazoles, the composition further comprises a third latent accelerator selected from at least one of substituted ureas, substituted imidazoles, and combinations thereof.

8. An adhesive composition comprising the one-part curable epoxy composition of any of the preceding claims.

9. The adhesive composition of claim 8 wherein the composition is curable at temperatures between 130°C and 200°C.

10. A composition comprising a cured adhesive composition according to claim 9.

11. The composition of claim 10 wherein the composition has a shear strength of at least 5 MPa, determined according to the Shear Strength test as described in the description.

12. The composition of claim 10 or 11 wherein the composition has a peel strength of at least 2.5 N/mm, determined according to the Peel Resistance test as described in the description.

13. The composition of any of claims 10, 11 or 12 wherein the composition has no more than 400% change in viscosity upon aging, determined according to the Rheology Measurements test as described in the description.

14. The composition of claim 10 wherein the composition has a shear strength of at least 20 MPa, determined according to the Shear Strength test as described in the description, a peel strength of at least 5 N/mm, determined according to the Peel Resistance test as described in the description, and no more than 150% change in viscosity upon aging, determined according to the Rheology Measurements test as described in the description.

15. An article comprising
(a) two substrates; and
(b) a layer of an adhesive composition disposed between the two substrates, wherein the adhesive composition comprises a one-part curable epoxy composition according to claim 1.

## Patentansprüche

1. Einteilige härtbare Epoxidzusammensetzung, umfassend:
a. ein wärmehärtbares Epoxidharz; und
b. ein latentes Härtungsmittelsystem in einer Menge, die ausreichend ist, um das Epoxidharz zu härten, umfassend
(i) mindestens ein mit Epoxidharz mischbares erstes Härtungsmittel, das einen latenten Härter umfasst, der ausgewählt ist aus Dicyandiamid und seinen Derivaten, und
(ii) zwei oder mehr latente Beschleuniger, die ausgewählt sind aus einer Kombination von zwei substituierten Imidazolen, einer Kombination von einem substituierten Imidazol und zwei substituierten Harnstoffen und einer Kombination von zwei substituierten Imidazolen und einem substituierten Harnstoff.

2. Zusammensetzung nach Anspruch 1, wobei die zwei oder mehr latenten Beschleuniger in einer Menge von gleich oder weniger als 1 Gew.-%, bezogen auf das Gesamtgewicht der Zusammensetzung, vorhanden sind.

3. Zusammensetzung nach einem der vorstehenden Ansprüche, wobei das wärmehärtbare Epoxidharz ausgewählt ist aus mindestens einem von Diglycidylethern von Bisphenol A, Diglycidylethern von Bisphenol F und Kombinationen davon.

4. Zusammensetzung nach einem der vorstehenden Ansprüche, wobei die substituierten Harnstoffe aus bis-substituierten Harnstoffen ausgewählt sind.

5. Zusammensetzung nach einem der vorstehenden Ansprüche, wobei die substituierten Imidazole aus mindestens einem von 1-*N*-substituierten, 2-*C-*substituierten Imidazolen, Metallimidazolatsalzen und Kombinationen davon ausgewählt sind.

6. Zusammensetzung nach einem der vorstehenden Ansprüche, wobei das wärmehärtbare Epoxidharz ein Diglycidylether von Bisphenol A ist; die substituierten Harnstoffe bis-substituierte Harnstoffe sind; und die substituierten Imidazole aus mindestens einem von 1-*N*-substituierten und 2-*C*-substituierten Imidazolen ausgewählt sind.

7. Zusammensetzung nach einem der vorstehenden Ansprüche, wobei, wenn es sich bei den latenten Beschleunigern um eine Kombination von zwei substituierten Imidazolen handelt, die Zusammensetzung ferner einen dritten latenten Beschleuniger umfasst, der aus der Gruppe bestehend aus mindestens einem von substituierten Harnstoffen, substituierten Imidazolen und Kombinationen davon ausgewählt ist.

8. Klebstoffzusammensetzung, umfassend die einteilige härtbare Epoxidzusammensetzung nach einem der vorstehenden Ansprüche.

9. Klebstoffzusammensetzung nach Anspruch 8, wobei die Zusammensetzung bei Temperaturen zwischen 130 °C und 200 °C härtbar ist.

10. Zusammensetzung, umfassend eine gehärtete Klebstoffzusammensetzung nach Anspruch 9.

11. Zusammensetzung nach Anspruch 10, wobei die Zusammensetzung bei Bestimmung gemäß dem Scherfestigkeitstest, wie in der Beschreibung beschrieben, eine Scherfestigkeit von mindestens 5 MPa aufweist.

12. Zusammensetzung nach Anspruch 10 oder 11, wobei die Zusammensetzung bei Bestimmung gemäß dem Schälwiderstandstest, wie in der Beschreibung beschrieben, einen Schälwiderstand von mindestens 2,5 N/mm aufweist.

13. Zusammensetzung nach einem der Ansprüche 10, 11 oder 12, wobei die Zusammensetzung bei Bestimmung gemäß den Rheologiemessungen, wie in der Beschreibung beschrieben, nach dem Altern keine Änderung der Viskosität von mehr als 400 % aufweist.

14. Zusammensetzung nach Anspruch 10, wobei die Zusammensetzung bei Bestimmung gemäß dem Scherfestigkeitstest, wie in der Beschreibung beschrieben, eine Scherfestigkeit von mindestens 20 MPa aufweist, bei Bestimmung gemäß dem Schälwiderstandstest, wie in der Beschreibung beschrieben, einen Schälwiderstand von mindestens 5 N/mm aufweist, und bei Bestimmung gemäß den Rheologiemessungen, wie in der Beschreibung beschrieben, nach dem Altern keine Änderung der Viskosität von mehr als 150 % aufweist.

15. Artikel, umfassend
(a) zwei Substrate; und
(b) eine Schicht aus einer Klebstoffzusammensetzung, die zwischen den zwei Substraten angeordnet ist, wobei die Klebstoffzusammensetzung eine einteilige härtbare Epoxidzusammensetzung nach Anspruch 1 umfasst.

## Revendications

1. Composition époxy durcissable en une partie comprenant :
a. une résine époxy thermodurcissable ; et
b. un système de durcissement latent en une quantité suffisante pour durcir la résine époxy, comprenant
(i) au moins un premier agent de durcissement miscible dans une résine époxy comprenant un durcisseur latent, choisi parmi un dicyandiamide et ses dérivés, et
(ii) deux accélérateurs latents ou plus choisis parmi une combinaison de deux imidazoles substitués, une combinaison d'un imidazole substitué et de deux urées substituées, et une combinaison de deux imidazoles substitués et d'une urée substituée.

2. Composition selon la revendication 1 dans laquelle les deux accélérateurs latents ou plus sont présents en une quantité égale ou inférieure à 1 % en poids sur la base du poids total de la composition.

3. Composition selon l'une quelconque des revendications précédentes dans laquelle la résine époxy thermodurcissable est choisie à partir d'au moins l'un parmi des éthers diglycidyliques de bisphénol A, des éthers diglycidyliques de bisphénol F, et des combinaisons de ceux-ci.

4. Composition selon l'une quelconque des revendications précédentes dans laquelle les urées substituées sont choisies parmi des urées bis-substituées.

5. Composition selon l'une quelconque des revendications précédentes dans laquelle les imidazoles substitués sont choisis à partir d'au moins l'un parmi des imidazoles à substitution 1-*N*, à substitution 2-*C*, des sels imidazolate de métal, et des combinaisons de ceux-ci.

6. Composition selon l'une quelconque des revendications précédentes dans laquelle la résine époxy thermodurcissable est un éther diglycidylique de bisphénol A ; les urées substituées sont des urées bis-substituées ; et les imidazoles substitués sont choisis à partir d'au moins l'un parmi des imidazoles à substitution 1*-N* et à substitution 2-*C*.

7. Composition selon l'une quelconque des revendications précédentes, dans laquelle, lorsque les accélérateurs latents sont une combinaison de deux imidazoles substitués, la composition comprend en outre un troisième accélérateur latent choisi à partir d'au moins l'un parmi des urées substituées, des imidazoles substitués, et des combinaisons de ceux-ci.

8. Composition adhésive comprenant la composition époxy durcissable en une partie selon l'une quelconque des revendications précédentes.

9. Composition adhésive selon la revendication 8 dans laquelle la composition est durcissable à des températures comprises entre 130 °C et 200 °C.

10. Composition comprenant une composition adhésive durcie selon la revendication 9.

11. Composition selon la revendication 10 dans laquelle la composition a une résistance au cisaillement d'au moins 5 MPa, déterminée selon le test de résistance au cisaillement tel que décrit dans la description.

12. Composition selon la revendication 10 ou 11 dans laquelle la composition a une résistance au pelage d'au moins 2,5 N/mm, déterminée selon le test de résistance au pelage tel que décrit dans la description.

13. Composition selon l'une quelconque des revendications 10, 11 ou 12 dans laquelle la composition n'a pas plus de 400 % de variation de viscosité au vieillissement, déterminée selon le test de mesures de rhéologie tel que décrit dans la description.

14. Composition selon la revendication 10 dans laquelle la composition a une résistance au cisaillement d'au moins 20 MPa, déterminée selon le test de résistance au cisaillement tel que décrit dans la description, une résistance au pelage d'au moins 5 N/mm, déterminée selon le test de résistance au pelage tel que décrit dans la description, et pas plus de 150 % de variation de viscosité au vieillissement, déterminée selon le test de mesures de rhéologie tel que décrit dans la description.

15. Article comprenant
(a) deux substrats ; et
(b) une couche d'une composition adhésive disposée entre les deux substrats, dans lequel la composition adhésive comprend une composition époxy durcissable en une partie selon la revendication 1.
